# EUROPEAN PATENT APPLICATION

(11) **EP 1 378 902 A2**
(43) Date of publication of application: **07.01.2004**
(21) Application number: 02025409.0
(22) Date of filing: 14.11.2002
(51) Int. Cl.: G11B 19/04, G11B 19/26, G11B 7/00

(54) **Method and apparatus for controlling data recording speed in an optical disk device**

(30) Priority: 05.07.2002 KR 2002039057
(71) Applicant: Hitachi-LG Data Storage Korea Inc., Seoul 150-010 (KR)
(72) Inventor: Jung, Young Hoon, Seoul, 152-056 (KR); Bahng, Keuk Young, Osan-shi Kyunggi-do, 447-717 (KR)
(74) Representative: Körner, Ekkehard, Dipl.-Ing.

(57) **Abstract**

The present invention relates to a method and apparatus that can control data recording speed such as in an optical disk device. Based on a number of occurrences of recording failure such as buffer underrun, a method and apparatus can either reduce a data recording speed or dynamically changes the speed to a pre-defined speed while recording input data onto a writable optical disk. Therefore, even if a user-selected data recording speed is higher than the transfer rate of the external input data, the data recording speed can be controlled to efficiently complete a data recording operation or operate at a more desired data recording speed.

## Description

### BACKGROUND OF THE INVENTION

### 1. Field of the Invention

The present invention relates to a method and apparatus for controlling data recording speed.

### 2. Background of the Related Art

Optical media, for instance, optical disks such as rewritable disk (CD-RW), are widely distributed, and are capable of storing data such as many hours of high quality digital video data and high quality digital audio data. An optical disk device, such as a CD-RW drive, which can either record data onto the rewritable disk (CD-RW) or playback the stored data, can be used connected to a host, such as a personal computer. External input data such as video and audio data received via the interface with the host gets recorded onto a medium in the optical disk device such as the rewritable disk at high rate of speed.

For instance, in a case where a user sets the data recording speed at 4x, the optical disk device temporarily stores external input data, received via an interface with the host into a data buffer. Then, the temporarily stored external input data gets extracted at the speed that corresponds to 4x. The data gets converted into the recordable data, signal processed and recorded onto the rewritable disk via a series of data recording operations to achieve the user-defined data recording speed in the optical disk device.

As described above, the related art optical disk device has various disadvantages. When a user-defined data recording speed is higher than a data transfer rate from the host, errors can occur. For example, when the data recording speed is higher than the data transfer rate from a host, buffer underrun occurs where temporarily stored data in a data buffer is less than a certain amount of data. In such case, the optical disk device repeatedly performs a series of pause and re-seek the data recording operations. Therefore, the user requested high speed data recording operation cannot be performed as requested (e.g., normal operations). Thus, there exists a problem of taking more data recording time in the user requested speed than when a recording operation runs at relatively lower speeds. Such an error filled high speed data access rate can take more time than a lower data access rate.

The above references are incorporated by reference herein where appropriate for appropriate teachings of additional or alternative details, features and/or technical background.

### SUMMARY OF THE INVENTION

An object of the invention is to solve at least the above problems and/or disadvantages and to provide at least the advantages described hereinafter.

Another object of the present invention to provide a controlling method and apparatus that can increase an overall data access rate of an apparatus.

Another object of the present invention to provide a controlling method and apparatus that adjusts a data access speed based on detected errors in an optical disk device.

Another object of the present invention to provide a controlling method and apparatus that regulates data recording speed in an optical disk to have a desirable data recording speed when recording external input data onto an optical disk, such as a rewritable disk e.g., CD-RW, and CD-Rewritable.

Another object of the present invention to provide a controlling method and apparatus that can either reduce the data recording speed or dynamically change the data recording speed to a pre-defined speed, while a data recording operation quantity or rate of recording failure.

Another object of the present invention to provide a controlling method and apparatus that can either reduce the data recording speed or dynamically change the data recording speed to a pre-defined speed, while a data recording operation of recording external input data onto a rewritable disk such as a CD-RW is being performed based on the number of occurrences of recording failure, such as buffer underrun.

To achieve at least the above objects in whole or in part, and in accordance with the present invention, there is provided a method that includes detecting recording failures while recording data onto an optical disk and reducing a current data recording speed when a number of the detected recording failures exceeds a threshold.

To further achieve at least the above objects in whole or in part, and in accordance with the present invention, there is provided a method that includes repeatedly detecting recording failures for an interval while recording input data onto an optical disk, and reducing a current data recording speed when a number of the detected recording failures in the interval exceeds a threshold.

To further achieve at least the above objects in whole or in part, and in accordance with the present invention, there is provided an apparatus that includes a detector that is configured to detect recording failures while recording input data and a controller that is configured to modify a current data recording speed in accordance with a number of the recording failures detected by said detector.

To further achieve at least the above objects in whole or in part, and in accordance with the present invention, there is provided an apparatus having an optical disk device that includes device for detecting recording failures while recording input data and device for reducing a current data recording speed when a number of detected recording failures exceeds a threshold.

Additional advantages, objects, and features of the invention will be set forth in part in the description which follows and in part will become apparent to those having ordinary skill in the art upon examination of the following or may be learned from practice of the invention. The objects and advantages of the invention may be realized and attained as particularly pointed out in the appended claims.

### BRIEF DESCRIPTION OF THE DRAWINGS

The invention will be described in detail with reference to the following drawings in which like reference numerals refer to like elements wherein:

FIG. 1 is a block diagram illustrating a preferred embodiment of an apparatus that controls data recording speed in accordance with the present invention;

FIG. 2 is a flow chart illustrating a preferred embodiment of a method for controlling data recording speed according to the present invention; and

FIG. 3 is a flow chart illustrating another preferred embodiment of a method for controlling data recording speed according to the present invention.

### DETAILED DESCRIPTION OF PREFERRED EMBODIMENTS

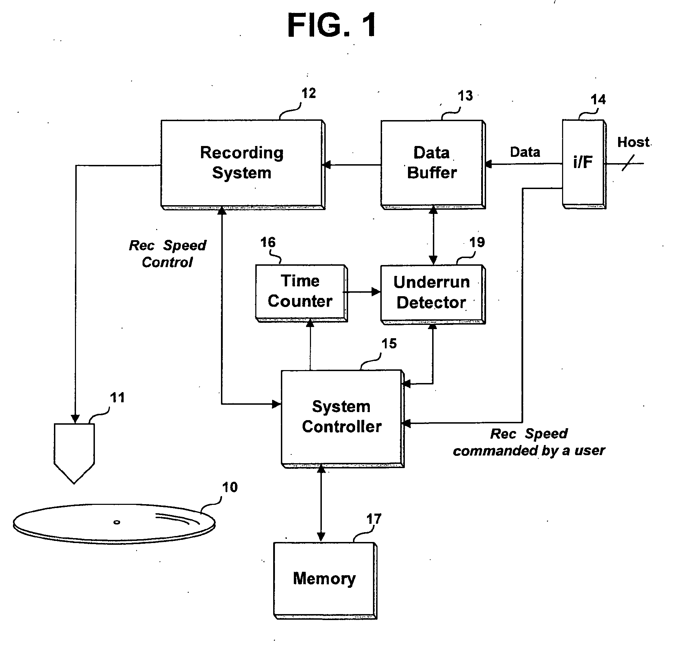

FIG. 1 is a block diagram illustrating a preferred embodiment of an apparatus that can control data recording speed in accordance with the present invention. As shown in FIG. 1 the apparatus may be applied, for example, in an optical disk device.

The optical disk device, such as a CD-RW drive coupled to a host or stand-alone can include an optical pick-up 11, a recording system 12 for recording data onto a rewritable optical disk 10 and a data buffer 13 for temporarily storing the input data such as external data received via an interface unit 14 coupled to the host. The host can be a personal computer or the like. The optical disk device can further include a system controller 15 for controlling the recording system 12. The system controller 15 can control the recording system 12 in accordance with a recording rate requested from the host via the interface unit 14 by a user, and to change or reduce a data recording speed in the recording system 12 down to a prescribed (e.g., optimal or overall faster) recording speed, which can be a set speed or a speed reduced by a certain amount. An underrun detector 19 checks underrun errors in the data buffer 13, and a time counter 16 counts a pre-defined specific length of time. A memory 17 can store information that is needed to reduce the data recording speed, and information on various recording speeds.

The controller 15 can also conduct a recording operation to record external input data or external input date received via the interface 14 with the host, at the high speed set by a user. The underrun detector 19 can inform the controller 15 whenever a buffer underrun occurs in the data buffer 13, for example, by detecting the number of occurrences and accumulating the count. However, other error counting schemes can be used. The controller 15 compares the accumulated count value with the pre-defined threshold value to distinguish whether the accumulated count value exceeds the threshold value.

According to the compared result, the controller 15 preferably either reduces the current data recording speed by 1 step, or performs a data recording speed controlling operation that reduces the speed down to the prescribed data recording speed.

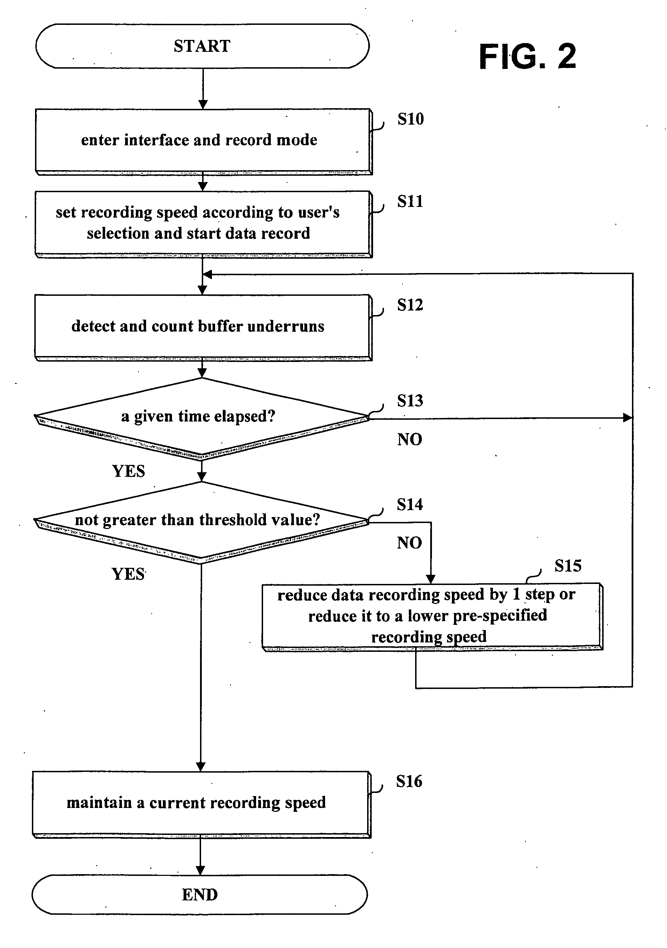

FIG. 2 is a flow chart illustrating a first preferred embodiment of a method for controlling data recording speed. As shown in FIG. 2, the first preferred embodiment will be described using an optical disk device and in particular, the optical device shown in FIG. 1. However, the present invention is not intended to be so limited. As shown in FIG. 2, a data recording mode for storing input data or the external input data, which is received via an interface with the host such as a personal computer, onto the rewritable disk 10 gets set and entered, for example, in the controller 15 (step S10).

According to a preset or user's record speed requested from the host, a data recording speed of the recording system 12 is set to the user-defined speed, e.g., 8X (eight times a basic speed (e.g., bits per second)). The recording system 12 is controlled to extract and process the external input data stored temporarily in the data buffer 13 at the corresponding speed (e.g., 8X). Then, the processed data is written onto the rewritable disk 10 (step S11).

On the other hand, errors are preferably substantially continuously detected. The underrun detector 19 can continuously detect for the buffer underrun in the data buffer 13 from the moment when the user-defined high speed data recording operation starts as described above and can accumulate the number of the buffer underrun occurrences (step S12).

When the time, counted by the time counter 16, exceeds the pre-defined length of time for example when the time, counted from the beginning of the data recording operation exceeds the pre-defined length of time, e.g., 30 seconds, the underrun detector 19 conveys the accumulated count of the buffer underrun occurrences up to that moment to the controller 15 (step S13). The controller 15, then compares the received accumulated count value with the pre-defined threshold value (step S14).

If the accumulated count of the buffer underrun occurrences exceeds the pre-defined number, e.g., 5, (step S14), then the controller 15 determines that the transfer rate of data received from the host is lower than the user-selected data recording speed. As a result, the data recording speed preferably gets lowered by 1 step, or can get lowered to the pre-defined recording speed (step S15). One exemplary set of data recording speeds can include 8X, 4X, 2X and X where X is a basic speed set in bits per second. Therefore, the data recording speed in the recording system 12 can be reduced to either 4X (four times of basic speed), 1 step down from the user-defined speed of 8X, or to the pre-defined recording speed, which can be 2X.

On the other hand, when the accumulated count of the buffer underrun occurrence does not exceed the pre-defined number (e.g., 5), the controller 15 determines that the transfer rate of data received from the host is not lower than the user-selected data recording speed. As a result, the controller 15 maintains the current data recording speed (step S16). Therefore, in an optical disk device such as a CD-RW drive, right after processing the data recording operations, the current data recording speed is to be reduced to a more desirable or the optimal data recording speed based on the detected and accumulated count of the buffer underrun occurrences during a certain length of time.

As described above, the detection and counting of recording failures represented by buffer underruns can be started from the beginning of data recording. However, the present invention is not intended to be so limited. For example, the detection and counted could be singly or repeatedly performed after a set amount of time passed or data transferred or could be performed after detection of an initial error recording failure.

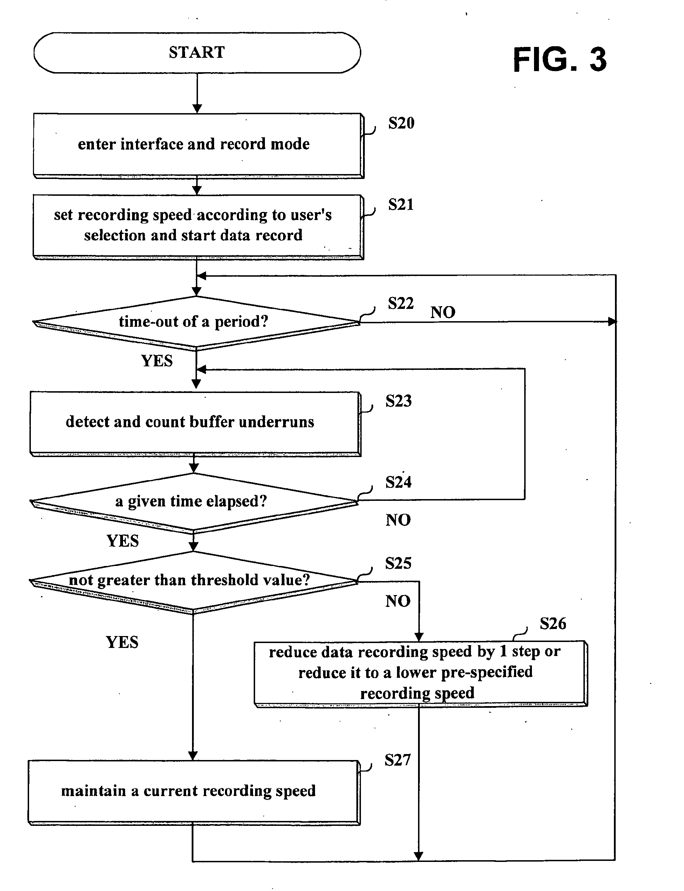

FIG. 3 is a flow chart illustrating a second preferred embodiment of a method for controlling data/access recording speed. The second preferred embodiment of a method for controlling data access/recording speed can be used in and will be described using the optical disk device shown in FIG. 1. However, the present invention is not intended to be so limited. As described above, after the device is enabled, the controller 15 can set data recording mode to store the input data or the external input data received via an interface with the host onto a rewritable disk 10 (step S20).

Moreover, according to a user's record speed requested from the host, a series of high speed data recording operations are performed (step S21). Such data recording operations can include setting the data recording speed in the recording system 12 to the user-defined speed (e.g., 8X), controlling the operation of the recording system 13, extracting and signal processing the external input data, which preferably gets temporarily stored into the data buffer 13, at the speed corresponding to 8X; and then recording onto the rewritable disk 10.

While the user-defined high speed data recording operation through the above described process or the like is being performed, the underrun detector 19 conducts buffer-error detection periodically, e.g., every 2 minutes (step S22) preferably whether the buffer underrun occurs or not in the data buffer 13. The time window of 2 minutes can be alarmed by respective time-outs of the time counter 16. If the buffer underrun occurs, then the underrun detector 19 counts the number of occurrences (step S23), then passes the counted number for a given time window, e.g., 30 seconds (step S24) preferably to the controller 15. Such operations can get repeatedly conducted whenever each of the respective time windows of 30 seconds and 2 minutes, which can be set in the time counter 16 by the controller 15, times out.

The controller 15 preferably receives the detected and accumulated count of the buffer underrun occurrence in a detection period e.g., 15 seconds, and then compares the received count with a pre-defined number. For instance, when the accumulated buffer underrun occurrence rate exceeds the pre-defined number (e.g., 5) (step S25), the controller 15 determines that the transfer rate of data received is lower than the defined (e.g., user-defined) data recording speed. As a result, the controller 15 may step the current data recording speed down by 1 step, or reduce the current data recording speed to the pre-defined recording speed (step S26).

Therefore, according to the second preferred embodiment of a method for controlling data access/recording speed, the data recording speed in the recording system 12 can be reduced to either 4X, 1 step down from the user-defined speed of 8X, or to the pre-defined recording speed, which is 2X.

On the other hand, when the accumulated count of the buffer underrun occurrences does not exceed the pre-defined number, which is 5, the controller 15 determines that the transfer rate of data, is not lower than the defined data recording speed. As a result, the controller 15 preferably maintains the current data recording speed (step S27). Thus, in an optical disk device, such as a CD-RW drive, preferably right after processing the data recording operations, the current data recording speed is to be set to a desired or optimal data recording speed based on the detected and accumulated count of the buffer underrun occurrence during a certain length of time.

As described above in the second preferred embodiment of a method for controlling data/access recording speed, the repeatedly initiated interval for detection and counting of recording failures represented by buffer underruns can be started from the beginning of data recording or later and can be periodically performed. However, the present invention is not intended to be so limited. For example, the repeated interval for detection and counting could be performed after detection of an initial error recording failure. Based on the number of detected recording failures in the interval, the data recording speed could be reduced or unchanged, and then, the detection interval can be repeated upon a next detected recording failure at the reduced or unchanged recording speed.

In addition, preferred embodiments according to the present invention can be applied to at least optical disk devices other than the CD-RW drive.

The preferred embodiments were described with an error being data underrrun. However, any error effecting data access/recording accuracy or data recording speed could be used. Further, any error causing an optical reader to pause and/or re-seek during data access could be used. Thus, based on the occurrence rate of failures other than the buffer underrun, such as a failure due to system load, the data recording speed can be dynamically controlled. Such system load failures can be occurring in the host.

As described above, preferred embodiments of an apparatus and method for controlling the data access/recording speed such as in an optical disk device in accordance with the present invention have various advantages. The current data recording speed is to be set to a desired or optimal data recording speed based on the detected and accumulated count. Also, when a user-defined data recording speed is higher than the transfer rate of the external input data, the method and apparatus each allows the data recording operation to run normal.

The foregoing embodiments and advantages are merely exemplary and are not to be construed as limiting the present invention. The present teaching can be readily applied to other types of apparatuses. The description of the present invention is intended to be illustrative, and not to limit the scope of the claims. Many alternatives, modifications, and variations will be apparent to those skilled in the art. In the claims, means-plus-function clauses are intended to cover the structures described herein as performing the recited function and not only structural equivalents but also equivalent structures. speed.

## Claims

1. A method for controlling the data recording speed in an optical disk device, comprising:
detecting recording failures while recording data onto an optical disk; and
reducing a current data recording speed when a number of the detected recording failures exceeds a threshold.

2. The method of claim 1, wherein said detecting step is conducted for a certain length of time.

3. The method of claim 2, wherein said detecting step comprises:
detecting occurrences of buffer underrun for a prescribed length of time from a beginning of a data recording operation; and
counting the occurrences.

4. The method of claim 3, wherein said reducing step reduces the current data recording speed by 1 step when the count of buffer underrun occurrences detected during said certain length of time exceeds the threshold.

5. The method of claim 3, wherein said reducing step reduces the current data recording speed to a pre-defined recording speed, when the count of buffer underrun occurrences detected during said certain length of time exceeds the threshold.

6. The method of claim 1, wherein said detecting step is conducted responsive to detection of an initial recording failure of a data recording operation.

7. The method of claim 6, wherein the detecting step can be repeatedly performed upon detecting a next recording failure during the data recording operation after said reducing a current data recording speed step is completed based on said initial recording failure.

8. A method for controlling the data recording speed in an optical disk device, comprising:
repeatedly detecting recording failures for an interval while recording input data onto an optical disk; and
reducing a current data recording speed when a number of the detected recording failures in the interval exceeds a threshold.

9. The method of claim 8, wherein said detecting step periodically detecting occurrences of buffer underrun for the interval during the data recording operation; and
counting the occurrences.

10. The method of claim 9, wherein said reducing step reduces the current data recording speed by 1 pre-defined step when the count of buffer underrun occurrences detected during said interval exceeds the threshold.

11. The method of claim 9, wherein said reducing step reduces the current data recording speed to a pre-defined recording speed, when the count of buffer underrun occurrences detected during said interval exceeds the threshold.

12. The method of claim 8, wherein the detecting step is periodically performed, wherein the recording failure comprises at least one of buffer underrun, failure caused by system load, failure caused by host load or an event causing pause or re-seek data recording operations, wherein the threshold is dynamically set, and wherein a set of recording speeds is 1X, 2X, 4X and 8X.

13. The method of claim 8, wherein the repeatedly detecting step is performed responsive to detecting an initial recording failure of a data recording operation, and wherein the repeatedly detecting step is performed responsive to detecting a first recording failure after each said interval.

14. An apparatus for controlling the data recording speed in an optical disk device, comprising:
a detector that is configured to detect recording failures while recording input data; and
a controller that is configured to modify a current data recording speed in accordance with a number of the recording failures detected by said detector.

15. The apparatus of claim 14, wherein said detector detects occurrences of buffer underrun for a preset length of time during the data recording operation and counts the occurrences.

16. The apparatus of claim 14, wherein said detector detects occurrences of the recording failure for a certain length of time from a beginning of a data recording operation.

17. The apparatus of claim 14, wherein said detector repeatedly detects the recording failures for a prescribed length of time during data recording operations.

18. The apparatus of claim 14, wherein the current data recording speed is set by a user selection.

19. The apparatus of claim 14, wherein said controller reduces the current data recording speed by 1 pre-defined step when a count of buffer underrun occurrences detected by said detector exceeds a threshold.

20. The apparatus of claim 14, wherein said controller reduces the current data recording speed to a pre-defined recording speed when a count of buffer underrun occurrences detected by said detector exceeds a threshold.

21. The apparatus of claim 14, wherein the recording failures comprise at least one of buffer underrun, system load error and an error that causes a pause and re-seek data recording operation, wherein the threshold is dynamically set, wherein a set of recording speeds is 1X, 2X, 4X and 8X where X is a preset value, and wherein the apparatus is an optical disk device.

22. An apparatus having an optical disk device, comprising:
means for detecting recording features while recording input data; and
means for reducing a current data recording speed when a number of detected recording failures exceeds a threshold.
